**Europäisches Patentamt**

**European Patent Office**

**Office européen des brevets**

(19)

(11) Veröffentlichungsnummer: **0 049 526**
**B1**

# EUROPÄISCHE PATENTSCHRIFT

(12)

(45) Veröffentlichungstag der Patentschrift:
18.05.88

(21) Anmeldenummer: 81108021.7

(22) Anmeldetag: 07.10.81

(51) Int. Cl.⁴: **G 01 N 33/48,** G 01 N 21/75

(54) Verfahren und Vorrichtung zur Bestimmung der Sauerstoff-Gleichgewichtskurven von Blut bzw. Hämoglobinlösungen.

(30) Priorität: 08.10.80 DE 3037962

(43) Veröffentlichungstag der Anmeldung:
14.04.82 Patentblatt 82/15

(45) Bekanntmachung des Hinweises auf die Patenterteilung:
18.05.88 Patentblatt 88/20

(84) Benannte Vertragsstaaten:
AT BE CH DE FR GB IT LI LU NL SE

(56) Entgegenhaltungen:
FR-A-2 269 713
FR-A-2 450 594

(73) Patentinhaber: Gersonde, Klaus, Prof. Dr.,
Preusweg 69, D-5100 Aachen (DE)
Patentinhaber: Sick, Hinrich, Dr., Eupenerstrasse
139, D-5100 Aachen (DE)

(72) Erfinder: Gersonde, Klaus, Prof. Dr., Preusweg 69,
D-5100 Aachen (DE)
Erfinder: Sick, Hinrich, Dr., Eupenerstrasse 139,
D-5100 Aachen (DE)

(74) Vertreter: Biermann, Wilhelm, Dr.- Ing.,
Morillenhang 39, D-5100 Aachen (DE)

## Beschreibung

Die Erfindung betrifft ein Verfahren zur Bestimmung der Gleichgewichtskurve zwischen dem Sauerstoff-Partialdruck eines Gases und dem Sauerstoffsättigungswert einer Blut bzw. Hämoglobinprobe, bei dem auf die als dünne Schicht vorliegende Probe in einem Meßraum ein Gas mit sich änderndem Sauerstoff-Partialdruck zur Einwirkung gebracht, und in Abhängigkeit von dem Sauerstoff-Partialdruck die Lichtabsorption durch die Blutprobe photometrisch bestimmt wird. Die Erfindung betrifft ferner eine besonders geeignete Vorrichtung zur Durchführung des erfindungsgemäßen Verfahrens.

Die bekannten Verfahren dieser Art machen sich die Tatsache zunutze, daß sich die Absorptionseigenschaften des Hämoglobins im Bereich des sichtbaren Lichtes bzw. im nahen IR- und UV-Bereich in Abhängigkeit von der Sauerstoffbeladung des Hämoglobins, d.h. von seinem Oxygenationszustand, ändern. Die Blut- bzw. Hämoglobinprobe wird dabei als dünne Schicht auf einem lichtdurchlässigen Schichtträger angeordnet, und ist auf einer Seite dem Reaktionsgas zugänglich. Dabei ist es auch bekannt, die Probe auf der dem Reaktionsgas zugänglichen Seite durch eine für die Lichtstrahlen und für die infrage kommenden Gas durchlässige Membran, beispielsweise aus TEFLON®, abzudecken (K. Schmidt und K. H. Heuser, Z. Respiration 26 (1969), S. 16-34). Dadurch wird die Probenschicht stabilisiert, und die Austrocknung der Probe während der Messung verhindert.

Ein gattungsgemäßes Verfahren ist auch aus der DE-AS 25 04 771 bekannt. Bei dem aus dieser Druckschrift bekannten Verfahren strömt ein sauerstoffhaltiges Gas mit kleiner Einströmgeschwindigkeit in das Desoxygeniergas ein und wird mit diesem verwirbelt.

Bei allen bekannten Verfahren wird stets die sogenannte "Bindungskurve" des Sauerstoffs gemessen, das heißt diejenige Gleichgewichtskurve, die sich bei ansteigendem Sauerstoff-Partialdruck einstellt. Es wird also in allen Fällen die Probe zunächst durch ein sauerstofffreies Desoxygeniergas vollständig desoxygeniert, und dann bei ansteigendem Sauerstoff-Partialdruck der Anstieg des an das Hämoglobin gebundenen Sauerstoffs aus der Höhe der Lichtabsorption bzw. aus der relativen Differenz der Lichtabsorption ermittelt.

Es ist jedoch nicht problemlos, den im Meßraum herrschenden effektiven Sauerstoff-Partialdruck der Höhe nach genau zu bestimmen. Der Sauerstoff-Partialdruck kann gemäß einer ersten bekannten Methode mit Hilfe einer im Meßraum angeordneten Sauerstoffühlelektrode gemessen werden. Die hiermit erzielte Meßgenauigkeit ist jedoch nicht so groß, wie es an sich wünschenswert wäre. Gemäß einer anderen bekannten Methode, der sogenannten Diffusionskammer-Methode, verzichtet man deshalb auf eine unmittelbare Messung des Sauerstoff-Partialdrucks in der Meßkammer, sondern geht für die Bestimmung des Sauerstoff-Partialdrucks davon aus, daß dieser sich nach einer logarithmischen Funktion in der Meßkammer erhöht, wenn der Sauerstoff über ein Diffusionshindernis, beispielsweise über eine Diffusionskapillare, in die Meßkammer eindiffundiert (H. Sick und K. Gersonde, Analytical Biochemistry 32 (1969), S.362-376 und 47 (1972) S. 46-56). Bei diesem Verfahren ist die für einen Meßzyklus benötigte Zeit durch die Diffusionsgeschwindigkeit des Sauerstoffs bestimmt, und kann nicht beliebig verkürzt werden.

Die FR-A-2 450 594 beschreibt ein Gerät zur unblutigen Messung der Pneusis-Funktion, d.h. das Druck- bzw. Strömungsverhalten des Sauerstoffs im Gewebe (Organ) wird bestimmt. —Ausgewertet wird die zeitabhängige Änderung eines speziellen Spektrums nach einer Unterbrechung der Sauerstoff-Zufuhr zum zu untersuchenden Objekt (Organ).

Der Erfindung liegt die Aufgabe zugrunde, ein Verfahren der eingangs genannten Art zu schaffen, das es gestattet, die Gleichgewichtskurve schneller und mit größerer Genauigkeit zu ermitteln als es mit den bekannten Verfahren möglich ist. Insbesondere soll die Meßgenauigkeit, und damit die Aussage über die Korrelation zwischen dem Sauerstoff-Partialdruck und dem damit im Gleichgewicht befindlichen am Hämoglobin gebundenen Sauerstoff, in demjenigen Bereich der Gleichgewichtskurve erhöht bzw. verbessert werden, dem für die Analyse der Gleichgewichtskurve die größte Bedeutung zukommt, d.h. insbesondere im Bereich niedriger Sauerstoff-Partialdrücke.

Gemäß der Erfindung wird diese Aufgabe dadurch gelöst, daß die Probe zunächst durch ein sauerstoffhaltiges Gas bis zur vollständigen Sättigung mit Sauerstoff oxygeniert wird, und danach durch kontrollierte Zufuhr von Desoxygeniergas zu dem auf die Probe einwirkenden Gasvolumen der Sauerstoff-Partialdruck fortlaufend definiert verringert, und so die Sauerstoff-Dissoziationskurve bestimmt wird. Vorzugsweise wird die Probe zunächst durch reinen Sauerstoff bis zur Sättigung oxygeniert.

Im Gegensatz zu den bekannten Verfahren wird bei dem erfindungsgemäßen Verfahren der Sauerstoffgehalt des Reaktionsgases während des Meßzyklus fortlaufend kontrolliert verringert. Der Sauerstoff-Partialdruck ändert sich dabei nach einer exponentiellen Funktion, wobei er sich anfangs stark, mit geringer werdender Sauerstoff-Konzentration jedoch zunehmend langsamer ändert. Das bedeutet, daß in dem physiologisch interessanten Konzentrationsbereich der Partialdruck-Abfall des Sauerstoffs langsam vor sich geht, und damit in diesem Bereich die Gleichgewichtskurve mit wesentlich größerer Genauigkeit ermittelt werden kann als bei dem bekannten Verfahren der Anreicherung des Reaktionsgases mit Sauerstoff, bei dem gerade im Bereich der geringen Konzentration, d.h. in dem steilen Anfangsteil der Gleichgewichtskurve, aus den geschilderten Gründen die Konzentrationsänderungen schnell erfolgen, und dadurch die erhaltene Kurve in diesem Bereich erheblich verzerrt sein kann.

Bei dem erfindungsgemäßen Verfahren, bei dem die Sauerstoff-Dissoziationskurve gemessen wird, erfolgt hingegen die Partialdruckänderung im Meßraum im Bereich hoher Sauerstoff-Sättigungswerte des Blutes schnell, und im Bereich niedriger Sauerstoff-Sättigungswerte des Blutes langsam, so daß dadurch dieser Bereich der Kurve gedehnt ist und so mit wesentlich größerer Genauigkeit gemessen werden kann.

Bei der praktischen Ausführung des Verfahrens steht der Meßraum mit einem Gasumwälzsystem in Verbindung, und bildet mit diesem ein konstantes Volumen. Dieses Volumen wird vor Beginn der Messung mit reinem Sauerstoff gefüllt. Die fallende Sauerstoff-Konzentration wird dabei durch geregeltes Einleiten des Desoxygeniergases in den gleichzeitig als Mischkammer dienenden Meßraum erzeugt. In dem Meßraum wird der Druck während der Messung konstant auf Atmosphärendruck gehalten, indem man dafür sorgt, daß das überschüssige Gas durch eine geeignete Öffnung aus dem Meßraum in die Atmosphäre entweichen kann.

Die Verringerung des Sauerstoff-Partialdrucks p in der Meßkammer gehorcht bei guter Durchmischung des Gases folgender Gesetzmäßigkeit:

$$(1) \ -\frac{dp}{p} = \frac{dV}{V_0}$$

wobei $V_0$ das konstante Volumen des Meßraums einschließlich des Umwälzsystems bedeutet, und V das Volumen des in den Meßraum eingeleiteten Desoxygeniergases. Die Lösung der Integration dieser Gleichung (1) ergibt:

$$(2) \ \ln p = \ln P_0 - \frac{V}{V_0}, \ bzw.$$

$$(2a) \ p = P_0 \cdot e^{-\frac{V}{V_0}}$$

Diese mathematische Betrachtung macht noch einmal deutlich, daß wegen der nach einem Exponentialgesetz erfolgenden Verringerung des Sauerstoff-Partialdruckes das erfindungsgemäße Verfahren eine wesentlich höhere Meßgenauigkeit im Bereich niedriger Sauerstoff-Partialdrucke ermöglicht.

Zudem ist es auch möglich, mit Hilfe einer gleichzeitigen Steuerung nach einem bestimmten Programm die Strömungsgeschwindigkeit des Desoxygeniergases so anzupassen bzw. zu beeinflussen, daß die Sauerstoff-Dissoziationskurve in Abhängigkeit vom eingeleiteten Volumen des Desoxygeniergases mit optimaler Geschwindigkeit erfaßt wird, indem in den Bereichen geringer Änderung der Sauerstoffsättigung der Probe das Desoxygeniergas schneller eingeleitet wird. Hierzu ist jedoch die Anwendung einer interaktiven Computerelektronik erforderlich. In diesem Fall übernimmt der Computer auch die vollständige Auswertung und rechnet die Meßkurve auf gebräuchliche Koordinaten um.

Bei Kenntnis des injizierten Desoxygeniergasvolumens V und des Gesamtvolumens des Reaktionsgases kann es zweckmäßig sein, zusätzlich zu dem Oxygeniergas und dem Desoxygeniergas noch ein Eichgas mit einem definierten Sauerstoff-Partialdruck zu verwenden, das eine partielle Belastung des Hämoglobins mit Sauerstoff bewirkt. Auf diese Weise erhält man eine Eichmarke auf der beiderseits offenen logarithmischen Skala des Schreibers, die das Abwarten des Endwertes bei der Befüllung des Meßraums mit dem Oxygeniergas überflüssig macht.

Weitere Merkmale und Vorteile der Erfindung ergeben sich aus der nachfolgenden Beschreibung einer für die Durchführung des Verfahrens besonders geeigneten Vorrichtung anhand der Zeichnungen. Von den Zeichnungen zeigt

Fig. 1 eine Meßkammer mit den peripheren Einrichtungen in einer schematischen Schnittdarstellung;

Fig. 2 eine Vorrichtung für die kontrollierte Zufuhr des Desoxygeniergases, ebenfalls in einer schematisierten Schnittdarstellung, und

Fig. 3 die bei der Meßkammer nach Fig. 1 verwendete Ausstreichvorrichtung für die Blutprobe in einer perspektivischen Einzeldarstellung.

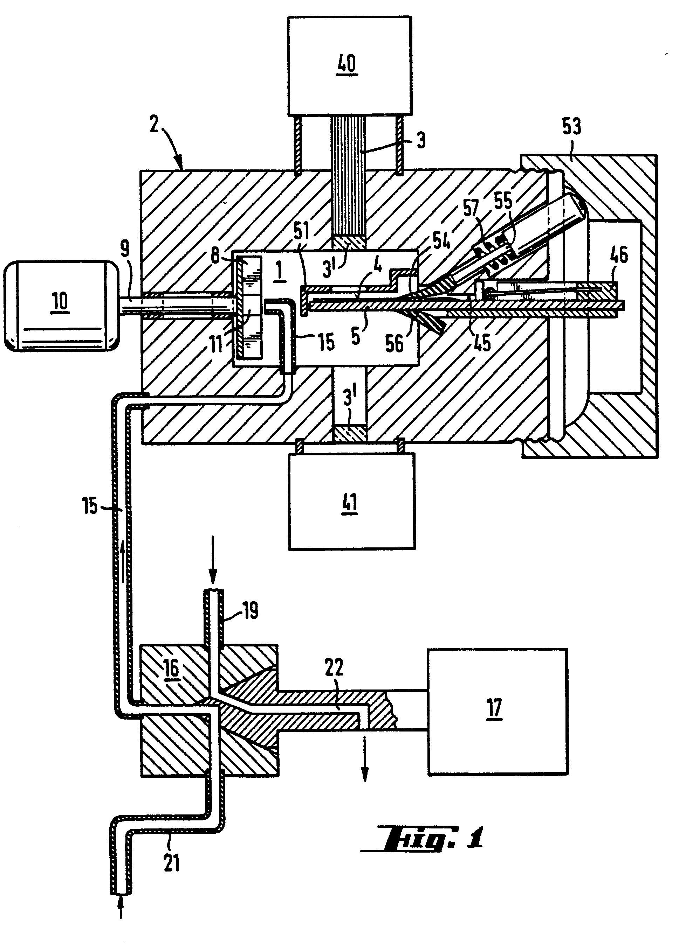

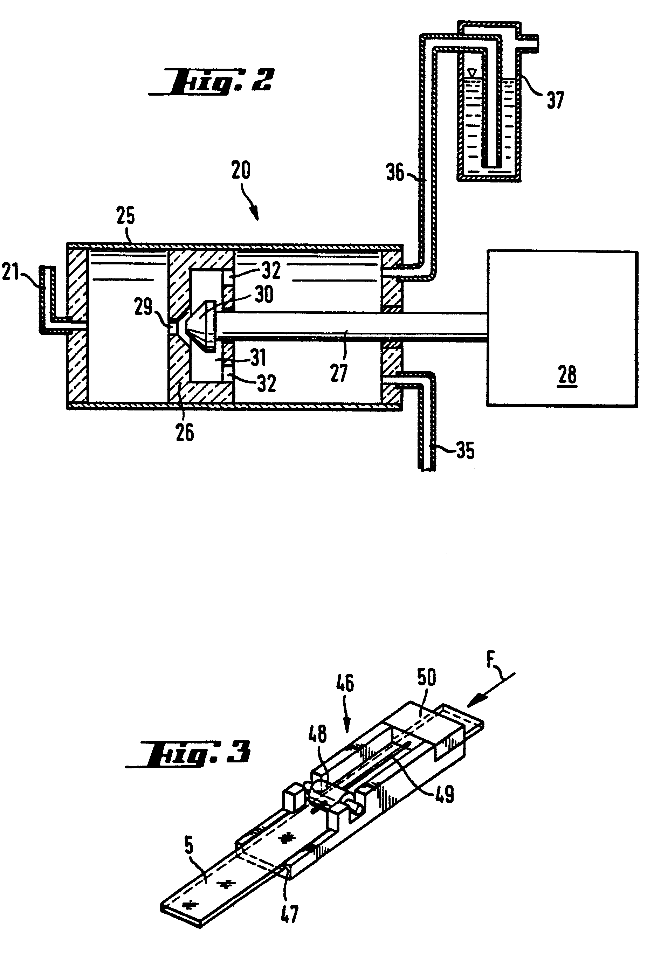

Die Meßkammer 1 besteht aus einem Gehäuse 2, das an den verschiedenen Zuleitungen und Öffnungen gegen eindringendes Störlicht abgedichtet ist. In der oberen und der unteren Wand des Gehäuses 2 ist je ein lichtleitender Einsatz 3 bzw. ein Fenster 3' angeordnet, durch die der Meßstrahl hindurchgeleitet wird. In dem Meßstrahl ist die Blut- bzw. Hämoglobinprobe als dünne Schicht 4 auf einem transparenten Schichtträger 5 angeordnet.

In der Meßkammer 1 ist seitlich ein Turbinenrad 8 angeordnet, das über die in der Wand des Gehäuses 2 gelagerte Antriebswelle 9 von dem außerhalb der Meßkammer angeordneten Motor 10 angetrieben wird. Die die Antriebswelle 9 aufnehmende Bohrung in der Gehäusewand hat einen deutlich größeren Durchmesser als die Antriebswelle 9, so daß zwischen der Antriebswelle und der Bohrung ein Ringspalt verbleibt, durch den das überschüssige Gas durch die gasdurchlässigen Lager hindurch aus der Meßkammer in die Außenatmosphäre entweichen kann. Das Turbinenrad 8 weist eine zentrische Ansaugöffnung 11 und radial ausgerichtete Kanäle auf, so daß zur Verwirbelung des Gases dieses durch die Zentrifugalkraft nach außen geschleudert wird, und die Ansaugung über die zentrale Öffnung 11 erfolgt.

Vor der zentralen Ansaugöffnung 11 mündet die Injektionsleitung 15 für das zuzuführende Reaktionsgas. Die Leitung 15 führt zu dem umsteuerbaren Ventil 16, wo sie mit Hilfe der Umsteuereinrichtung 17 entweder mit der zu der Oxygeniergasquelle führenden Leitung 19, oder mit der das Desoxygeniergas liefernden Dosiervorrichtung 20 über die Leitung 21 verbunden werden kann.

Das jeweils nicht verwendete Gas, das also nicht in die Meßkammer geleitet wird, kann über die Hilfsbohrung 22 in die Atmosphäre entweichen. Diese Umsteuereinrichtung kann in einer anderen Ausführungsform zusätzlich zu diesen beiden Gasen auch ein Eichgas in die Meßkammer einleiten.

Die Dosiervorrichtung 20 für die kontrollierte Einleitung des Desoxygeniergases umfaßt einen Glaszylinder 25, in dem ein Kolben 26 über die Kolbenstange 27 mit Hilfe eines steuerbaren Motorantriebs 28 hin- und herbewegt werden kann. Der Kolben 26 ist auf der Kolbenstange 27 beweglich angeordnet und weist eine Ventilöffnung 29 auf, die von dem am Ende der Kolbenstange 27 angeordneten Schließteil 30 verschließbar ist. Der mit der Ventilöffnung 29 in Verbindung stehende Hohlraum 31 des Kolbens 26 steht über Bohrungen 32 mit dem hinter dem Kolben 26 liegenden Hohlraum des Glaszylinders 25 in Verbindung. Wenn der Kolben 26 durch die Kolbenstange 27 geschoben wird, ist das Ventil 29, 30 geschlossen, so daß dann das vor dem Kolben 26 befindliche Gasvolumen aus dem Glaszylinder 25 über die Leitung 21 und 15 in die Meßkammer 1 hineingedrückt wird.

Hinter dem Kolben 26 ist an dem Zylinder 25 die Leitung 35 angeschlossen, über die das Desoxygeniergas zugeführt wird. Andererseits ist der Zylinder 25 über die Leitung 36 an ein Überdruckventil 37 angeschlossen, das für einen geringen gleichbleibenden Überdruck von beispielsweise 5 mbar in dem Zylinder 25 sorgt, wenn das Kolbenventil 29, 30 geschlossen ist. Es kann z. B., wie dargestellt, durch ein in eine Sperrflüssigkeit eintauchendes Rohr gebildet sein. Bei Rücklauf des Kolbens 26 öffnet sich das Ventil 29, 30 und gestattet den freien Durchtritt des Desoxygeniergases, so daß sich der vordere Teil des Glaszylinders 25 wieder mit dem Desoxygeniergas füllt.

Der Meßstrahl wird von einer geeigneten Strahlungsquelle 40, die außerhalb des Gehäuses 2 angeordnet ist, durch den lichtleitenden Einsatz 3, den Schichtträger 5 und das Fenster 3' auf einen geeigneten Strahlungsempfänger 41 gerichtet. Zweckmäßig wird monochromatisches Licht verwendet, beispielsweise mit einer Wellenlänge von 436 nm. Eine weitere Erhöhung der Meßgenauigkeit läßt sich mit einem Zweistrahlsystem erreichen, bei dem der Lichtstrahl in zwei monochromatische Lichtstrahlen gleicher Wellenlänge geteilt wird, von denen einer durch die Meßkammer geführt wird, während der andere als Referenzstrahl zur Überwachung der Intensität des monochromatischen Lichtes nach einem Differenz- bzw. Verhältnismeßverfahren dient.

Das Gehäuse 2 weist seitlich eine Öffnung 45 auf, in die eine Ausstreichvorrichtung 46 eingesetzt wird. Die Ausstreichvorrichtung 46 weist eine durchgehende Führung 47 auf, deren Innenabmessungen dem Querschnitt des Schichtträgers 5 entsprechen. In dieser Führung 47 wird der Schichtträger 5 von außen eingeschoben. Oberhalb der Führung 47 ist ein Ausstreichkörper 48 in vertikaler Richtung beweglich gelagert. Der Ausstreichkörper 48 wird durch eine Feder 49, die in dem Endstück 50 befestigt ist, gegen den Schichtträger 5 angedrückt. Mit Hilfe dieser besonderen Einrichtung wird der erforderliche Blutausstrich, d.h. die notwendige dünne Schicht, gewissermaßen innerhalb der Meßkammer hergestellt, so daß die ausgestrichene Probe nicht mehr mit der Außenatmosphäre in Berührung kommt, sondern sich unmittelbar in der zuvor konditionierten und äquilibrierten Meßkammer befindet.

Zur Herstellung der dünnen Probenschicht befindet sich die Ausstreichvorrichtung 46 zunächst außerhalb des Gehäuses 2. Der Schichtträger 5 wird in Richtung des Pfeiles F ganz in die Führung 47 eingeführt. Sodann wird auf das vordere Ende des Schichtträgers 5 ein Tropfen der zu untersuchenden Flüssigkeit aufgebracht. Anschließend wird der Schichtträger 5 so weit zurückgezogen, bis das vordere Ende sich etwa unter dem Ausstreichkörper befindet, und die Ausstreichvorrichtung 46 in die Öffnung 45 eingeführt. Der Schichtträger wird dann bis an den Anschlag 51 innerhalb der Meßkammer vorgeschoben. Während dieses Vorgangs erfolgt das Ausstreichen der Probe.

Mit dieser Einrichtung lassen sich gut reproduzierbare Schichten von ca. 5 bis 50 µm Dicke erzeugen. Die Dicke der jeweiligen Schicht hängt von der auf den Schichtträger aufgebrachten Blut- bzw. Lösungsmenge und deren Viskosität ab. Sobald der Schichtträger in die Meßkammer eingeführt ist, wird eine elastische Dichtungslippe 54, z. B. aus Silikonkautschuk, die an einer in der Wand des Gehäuses 2 verschiebbar gelagerten Halterung 55 befestigt ist, gegen den Schichtträger 5 angelegt. Auf der unteren Seite liegt gegen den Schichtträger 5 ebenfalls eine ortsfest angeordnete elastische Dichtung 56 an. Die Dichtungen 54, 56 haben die Aufgabe, das unkontrollierte Eindringen von Luft zu verhindern, indem an der Stelle, an der der Schichtträger 5 die Gehäusewand durchdringt, die Abdichtung erfolgt. Die Betätigung der Halterung 55 erfolgt beim Aufsetzen der lichtdichten Kappe 53 gegen die Wirkung der Feder 57.

Das bei der Messung verwendete Oxygeniergas und das Desoxygeniergas, und, falls darüberhinaus ein Eichgas zur Anwendung kommt, auch das Eichgas, werden vor ihrer Einleitung in die Meßkammer sorgfältig temperiert und so weit mit Wasserdampf angereichert, daß der Wasserdampfpartialdruck des Gases mit dem Wasserdampfdruck der Probe im Gleichgewicht ist, so daß auf diese Weise eine Austrocknung der Probenschicht und eine damit verbundene Verfälschung der Meßwerte, sicher vermieden werden. Zum Zweck der Einstellung des richtigen Wasserdampfpartialdrucks der Gase kann es zweckmäßig sein, die Anfeuchtung der Gase nicht mit reinem Wasser, sondern mit Elektrolytlösungen einer solchen Konzentration vorzunehmen, deren Wasserdampfdruck oberhalb der Lösung dem Wasserdampfdruck der Probe entspricht. Geeignete Lösungen für die Anfeuchtung der Gase und geeignete Verfahren hierfür stehen dem Fachmann zur Verfügung. Selbstverständlich müssen vor und während der Durchführung der Messung die Meßkammer und alle mit dem Reaktionsgas in Berührung kommenden Teile der Apparatur sorgfältig temperiert werden, wobei bei der Untersuchung von menschlichem Blut in der Regel eine Temperatur von 37 Grad Celsius eingestellt wird.

Mit der beschriebenen Vorrichtung wird das erfindungsgemäße Verfahren, das heißt die Messung und Analyse der Sauerstoff-Dissoziationskurve, in folgender Reihenfolge durchgeführt:

Zunächst wird die Apparatur temperiert, und durch Thermostaten auf der gewünschten Temperatur gehalten. In die Meßkammer wird sodann Oxygeniergas, z. B. reiner Sauerstoff, eingeleitet, das zuvor ebenfalls temperiert und mit Wasserdampf angereichert wurde. In die betriebsbereite Meßkammer wird sodann die Probe eingebracht, indem der mit einem Tropfen der zu untersuchenden Lösung versehene Schichtträger über die Ausstreichvorrichtung in die Meßkammer eingeschoben wird. Nach dem Abdichten des Einführungsschlitzes wird weiter Oxygeniergas in die Meßkammer eingeleitet, und zwar solange, bis die vollständige Sauerstoffsättigung der Probe erreicht ist, und die Meßkammer einen definierten Ausgangspartialdruck $P_0$ des Sauerstoffs aufweist. Die Oxygenation der Probe wird dabei photometrisch verfolgt, und zwar unter Verwendung von monochromatischem Licht mit einer Wellenlänge von z. B. 436 nm. Nach Erreichen des so definierten Sättigungszustandes wird bei gleichzeitiger Registrierung der Lichtabsorption das konditionierte Desoxygeniergas mit gesteuerter Geschwindigkeit in den Meßraum eingeleitet. Die hierbei vom Schreiber wiedergegebene Kurve entspricht der Sauerstoff-Dissoziationskurve der Probe und enthält alle gewünschten Informationen über die Sauerstoffbindungseigenschaften der Probe. Erfindungsgemäß wird hierbei die Lichtabsorption in Abhängigkeit vom eingeleiteten Desoxygeniergas-Volumen gemessen, d.h. es wird eine Größe, die der Sauerstoffsättigung der Probe proportional ist, über dem eingeleiteten Desoxygeniergas-Volumen $V \sim \ln p$ bzw. dem relativen eingeleiteten Desoxygeniergas-Volumen

$$\frac{V}{V_c} = \ln p_0 - \ln p$$ registriert.

Am Ende der Messung wird verstärkt Desoxygeniergas eingeleitet, um zu überprüfen, ob die Probe vollständig desoxygeniert ist.

Zur automatischen Steuerung und Auswertung kann zweckmäßigerweise ein interaktiver Mikrocomputer eingesetzt werden, mit dessen Hilfe auch eine automatische Analyse der Sauerstoff-Dissoziationskurve erfolgen kann. Dabei nimmt das Computerprogramm insbesondere eine Analyse der Sauerstoff-Dissoziationskurve dergestalt vor, daß bei Annahme physiologisch relevanter Grenzbedingungen die Sauerstoff-Freisetzungskapazität des Blutes bestimmt wird. Außerdem können andere physiochemische Eigenschaften, wie der Sauerstoff-Halbsättigungsdruck, der Hill-Koeffizient u.a.m. aus den Meßwerten bestimmt werden. Ebenso ist es möglich, eine Statusanalyse der roten Blutkörperchen hinsichtlich der darin vorhandenen Hämoglobine und Effektoren, über die Auswertung der Sauerstoffdissoziationskurve einer Blutprobe durchzuführen.

**Patentansprüche**

1. Verfahren zur Bestimmung der Gleichgewichtskurve zwischen dem Sauerstoff-Partialdruck eines Gases und dem Sauerstoffsättigungswert einer Blut- bzw. Hämoglobinprobe, bei dem auf die als dünne Schicht vorliegende Probe in einem Meßraum ein Gas mit sich änderndem Sauerstoff-Partialdruck zur Einwirkung gebracht, und in Abhängigkeit von dem Sauerstoff-Partialdruck die Lichtabsorption durch die Blutprobe photometrisch bestimmt wird, dadurch gekennzeichnet, daß die Probe zunächst durch ein sauerstoffhaltiges Gas bis zur vollständigen Sättigung mit Sauerstoff oxygeniert wird, und danach durch kontrollierte Zufuhr von Desoxygeniergas zu dem auf die Probe einwirkenden Gasvolumen der Sauerstoff-Partialdruck des Gases fortlaufend definiert verringert, und so die Sauerstoff-Dissoziationskurve bestimmt wird.

2. Verfahren nach Anspruch 1, dadurch gekennzeichnet, daß der Sauerstoff-Partialdruck des Reaktionsgases aus der in das Reaktionsgas eingeleiteten definierten Desoxygeniergasmenge berechnet wird.

3. Verfahren nach Anspruch 1 oder 2, dadurch gekennzeichnet, daß der Sauerstoff-Partialdruck mit logarithmischer Zeitabhängigkeit verrinngert wird, indem das Desoxygeniergas mit gleichbleibender Geschwindigkeit, bzw. mit in der Zeiteinheit gleichbleibenden Mengen, in das Reaktionsgas eingeleitet wird.

4. Verfahren nach Anspruch 1 oder 2, dadurch gekennzeichnet, daß der Sauerstoff-Partialdruck mit logarithmischer Abhängigkeit von der eingeleiteten Menge verringert wird, indem das Desoxygeniergas mit in der Zeiteinheit variablen Mengen in das Reaktionsgas eingeleitet wird.

5. Verfahren nach einem der Ansprüche 1 bis 4, dadurch gekennzeichnet, daß die Probe zunächst durch reinen Sauerstoff bis zur Sättigung oxygeniert wird.

6. Verfahren nach einem der Ansprüche 1 bis 5, dadurch gekennzeichnet, daß die Probe durch ein Eichgas mit einem vorgegebenen Sauerstoff-Partialdruck oxygeniert wird.

7. Verfahren nach einem der Ansprüche 1 bis 6, dadurch gekennzeichnet, daß das Desoxygeniergas in den Ansaugstrom einer das Reaktionsgas verwirbelnden Turbine eingeleitet wird.

8. Verfahren nach einem der Ansprüche 1 bis 7, dadurch gekennzeichnet, daß die Reaktionsgase vor dem Einleiten in die Meßkammer konditioniert, d.h. temperiert und so weit mit Wasserdampf angereichert werden, daß ihr Wasserdampfpartialdruck mit dem Wasserdampfdruck der zu untersuchenden Probe im Gleichgewicht steht.

9. Verfahren nach Anspruch 8, dadurch gekennzeichnet, daß der Blutausstrich, d.h. die Herstellung der dünnen Schicht der Probe, innerhalb des konditionierten Reaktionsgases erfolgt.

10. Vorrichtung zur Durchführung des Verfahrens nach einem der Ansprüche 1 bis 9, mit einer Meßkammer (1), einem in der Meßkammer (1) angeordneten lichtdurchlässigen Träger (5) für die Blutprobe (4), einem Photometer und Mitteln zum Hindurchleiten des Meßstrahls durch die Probe (4), einer in die Meßkammer (1) mündenden, mit einer Gaseinspeisungsvorrichtung verbindbaren Gaszuführungsleitung (15), und einer Verwirbelungsvorrichtung für das Reaktionsgas, wobei das photometrische Ausgangssignal und das dem Sauerstoff-Partialdruck proportionale Signal auf ein Auswertegerät, wie einen X-Y-Schreiber, geführt werden, dadurch gekennzeichnet, daß die Verwirbelungsvorrichtung ein Turbinenrad (8) mit zentraler Ansaugöffnung ist, und daß die Gaszuführungsleitung (15) vor der zentralen Ansaugöffnung mündet.

11. Vorrichtung nach Anspruch 10, dadurch gekennzeichnet, daß eine Seitenwand der Meßkammer mit einer schlitzartigen Öffnung (45) versehen ist, in die eine mit einer Führung (47) für den Schichtträger (5) versehene Ausstreichvorrichtung (46) einschiebbar ist, die in ihrem vorderen, d.h. der Meßkammer zugewandten Bereich mit einem von oben federnd auf den Schichtträger (5) wirkenden Ausstreichkörper (48) versehen ist.

12. Vorrichtung nach Anspruch 11, dadurch gekennzeichnet, daß innerhalb der Meßkammer (1) ein die Endstellung des Schichtträgers (5) bestimmender Anschlag (51) angeordnet ist.

13. Vorrichtung nach Anspruch 11 oder 12, dadurch gekennzeichnet, daß in der Wand der Meßkammer oberhalb des Schichtträgers eine flexible Dichtlippe (54) derart verschiebbar angeordnet ist, daß sie nach Einsetzen des Schichtträgers (5) bei Betätigung von außen sich abdichtend gegen den Schichtträger (5) legt.

14. Vorrichtung nach einem der Ansprüche 11 bis 13, dadurch gekennzeichnet, daß die die schlitzartige Öffnung (45) aufweisende Wand des Gehäuses (2) durch eine lichtundurchlässige Kappe (53) gegen das Eindringen von Störlicht abdeckbar ist.

## Claims

1. A method of ascertaining the equilibrium curve of the oxygen partial pressure of a gas against the oxygen saturation value of a blood or hemoglobin sample in which a gas with a changing oxygen partial pressure is caused to act on the sample in the form of thin film placed in a measuring space and the light absorption by the blood sample is photometrically measured against the oxygen partial pressure, characterized in that the sample is firstly oxygenated by an oxygen containing gas until it is completely saturated with the oxygen and thereafter the oxygen partial pressure is continuously reduced by the monitored supply of desoxygenating gas to the gas volume acting on the sample in a defined manner and the oxygen dissociation curve is determined in this manner.

2. The method as claimed in claim 1 characterized in that the oxygen partial pressure of the reaction gas is computed from the controlled amount of desoxygenating gas introduced into the reaction gas.

3. The method as claimed in claim 1 or claim 2 characterized in that the oxygen partial pressure is reduced with a logarithmic dependence on time inasfar as desoxygenating gas is introduced into the reaction gas at a constant rate or in amounts which are the same for units of time.

4. The method as claimed in claim 1 or claim 2 characterized in that the oxygen partial pressure is reduced with a logarithmic function of time inasfar as the desoxygenating gas is introduced into the reaction gas in amounts which vary for each unit of time.

5. The method as claimed in any one of the claims 1 through 4 characterized in that the sample is firstly oxygenated by pure oxygen until saturation is achieved.

6. The method as claimed in any one of the claims 1 through 5 characterized in that the sample is oxygenated with a calibrating gas with a preset oxygen partial pressure.

7. The method as claimed in any one of the claims 1 through 6 characterized in that the desoxygenating gas in introduced into the intake current of a turbine causing swirling of the reaction gas.

8. The method as claimed in any one of the claims 1 through 7 characterized in that prior to introduction into the measuring chamber the reaction gases are conditioned and so enriched with water vapor that the water vapor partial pressure thereof is in equilibrium with the water vapor partial pressure of the sample to be investigated.

9. The method as claimed in claim 8 characterized in that the smearing of the blood, that it to say the production of the thin film of the sample, takes place within the conditioned reaction gas.

10. An apparatus for carrying out the method as claimed in any one of the claims 1 through 9 comprising a measuring chamber (1), a transparent carrier (5) arranged in the measuring chamber (1) for the blood sample (4), a photometer and means for directing the measuring beam through the sample (4), a gas supply duct (15) opening into the measuring chamber (1) and adapted to be connected with a gas feed device, and device for causing swirling of the reaction gas, the photometer output signal and the signal proportional to the oxygen partial pressure being fed to a processing device such as an X-Y plotter, characterized in that the device causing swirling is a turbine impeller (8) with a central intake opening and in that the gas supply duct (15) ends upstream from the central intake opening.

11. The apparatus as claimed in claim 10 characterized in that one side wall of the measuring chamber is provided with a slot-like opening (45) into which a smearing device (46) provided with a guide (47) for the film carrier (5) is able to be inserted and the same is provided in its front part, i. e. the part nearer the measuring chamber, with a smearing member (48) resiliently acting downwards onto the film carrier (5).

12. The apparatus as claimed In claim 11 characterized by a stop (51) arranged inside the measuring chamber (1) for setting the terminal position of the film carrier (5).

13. The apparatus as claimed in claim 11 or claim 12 characterized by a flexible sealing lip (54) so arranged in sliding manner in the wall of the measuring chamber at a higher level than the film carrier (5) that after insertion of the film carrier it sealingly engages the film carrier (5) on actuation from the outside.

14. The apparatus as claimed in any one of the claims 11 through 13 characterized in that the wall which has the slot-like opening (45) of the housing (2) is able to be covered over by an opaque cap (53) as a shield for preventing the entry of interfering light.

**Revendications**

1. Procédé pour déterminer la courbe d'équilibre entre la pression partielle de l'oxygène d'un gaz et la valeur de la saturation en oxygène d'un échantillon de sang ou d'hémoglobine, suivant lequel, sur l'échantillon présent sous la forme d'une couche mince dans une chambre de mesure, on fait agir un gaz dans lequel la pression partielle de l'oxygène varie et on détermine, par voie photométrique, l'absorption de lumière par l'échantillon de sang en fonction de la pression partielle de l'oxygène, caractérisé en ce que l'échantillon est initialement oxygéné par un gaz contenant de l'oxygène jusqu'à saturation complète en oxygène, puis, par un apport contrôlé de gaz de désoxygénation au volume de gaz agissant sur l'échantillon, la pression partielle de l'oxygène est graduellement abaissée de manière définie et la courbe de dissociation de l'oxygène est déterminée de cette manière.

2. Procédé suivant la revendication 1, caractérisé en ce que la pression partielle de l'oxygène du gaz de réaction est calculée à partir de la quantité de gaz de désoxygénation définie admise dans le gaz de réaction.

3. Procédé suivant la revendication 1 ou 2, caractérisé en ce que la pression partielle de l'oxygène est diminuée de manière logarithmique en fonction du temps par le fait que le gaz de désoxygénation est admis dans le gaz de réaction à une vitesse constante ou en des quantités restant constantes par unité de temps.

4. Procédé suivant la revendication 1 ou 2, caractérisé en ce que la pression partielle de l'oxygène est diminuée de manière logarithmique en fonction de la quantité admise par le fait que le gaz de désoxygénation est admis dans le gaz de réaction en des quantités variables par unité de temps.

5. Procédé suivant l'une quelconque des revendications 1 à 4, caractérisé en ce que l'échantillon est d'abord oxygéné jusqu'à saturation par de l'oxygène pur.

6. Procédé suivant l'une quelconque des revendications 1 à 5, caractérisé en ce que l'échantillon est oxygéné par un gaz d'étalonnage dans lequel la pression partielle de l'oxygène est prédéfinie.

7. Procédé suivant l'une quelconque des revendications 1 à 6, caractérisé en ce que le gaz de désoxygénation est admis dans le courant d'aspiration d'une turbine faisant tourbillonner le gaz de réaction.

8. Procédé suivant l'une quelconque des revendications 1 à 7, caractérisé en ce qu'avant leur admission dans la chambre de mesure, les gaz de réaction sont conditionnés, c'est-à-dire soumis à un équilibrage de température, et sont enrichis en vapeur d'eau au point que la pression partielle de la vapeur d'eau y soit à l'équilibre avec la tension de vapeur de l'eau de l'échantillon à examiner.

9. Procédé suivant la revendication 8, caractérisé en ce que l'étalement du sang, c'est-à-dire la formation de la couche mince de l'échantillon, s'effectue dans le gaz de réaction conditionné.

10. Appareil pour réaliser le procédé suivant l'une quelconque des revendications 1 à 9, comportant une chambre de mesure (1), un support transparent (5) pour l'échantillon de sang

(4), disposé dans la chambre de mesure (1), un photomètre et des moyens pour amener le faisceau de mesure à traverser l'échantillon (4), une conduite d'alimentation de gaz (15) s'ouvrant dans la chambre de mesure (1) et pouvant être raccordée à un dispositif d'alimentation de gaz, et un dispositif de tourbillonnement pour le gas de réaction, le signal de sortie photométrique et le signal proportionnel à la pression partielle de l'oxygène étant amenés à un appareil d'évaluation, comme un enregistreur X-Y, caractérisé en ce que le dispositif de tourbillonnement est une roue de turbine (8) à orifice d'aspiration central et que la conduite d'alimentation de gaz (15) s'ouvre devant l'orifice d'aspiration central.

11. Appareil suivant la revendication 10, caractérisé en ce qu'une paroi latérale de la chambre de mesure est pourvue d'une ouverture en forme de fente (45), dans laquelle un dispositif d'étalement (46) pourvu d'une glissière (47) pour le support de couche (5) peut être inséré, ce dispositif étant pourvu dans sa zone antérieure, c'est-à-dire sa zone tournée vers la chambre de mesure, d'un organe d'étalement (48) agissant élastiquement du haut sur le support de couche (5).

12. Appareil suivant la revendication 11, caractérisé en ce qu'à l'intérieur de la chambre de mesure (1) est disposée une butée (51) déterminant la position d'extrémité du support de couche (5).

13. Appareil la revendication 11 ou 12, caractérisé en ce que dans la paroi de la chambre de mesure, au-dessus du support de couche, est prévue une lèvre d'étanchéité flexible (54) qui peut être déplacée d'une manière telle qu'après l'insertion du support de couche (5), lors d'un actionnement de l'extérieur, elle s'applique de manière étanche contre le support de couche (5).

14. Appareil suivant l'une quelconque des revendications 11 à 13, caractérisé en ce que la paroi du boîtier (2) présentant l'ouverture en forme de fente (45) peut être couverte par une coiffe opaque (53) empêchant toute entrée de lumière parasite.

*Fig. 1*

**Fig. 2**

**Fig. 3**